# FASCICULE DE BREVET EUROPEEN

(11) **EP 4 393 049 B1**
(45) Date de publication et mention de la délivrance du brevet: **09.04.2025**
(21) Numéro de dépôt: 22758501.5
(22) Date de dépôt: 29.07.2022
(51) Int. Cl.: H02K 15/06

(54) **PROCÉDÉ ET ENSEMBLE D'ASSEMBLAGE D'ÉPINGLES CONDUCTRICES POUR UNE MACHINE ÉLECTRIQUE TOURNANTE**
VERFAHREN UND ANORDNUNG ZUR MONTAGE VON LEITENDEN HAARNADELWICKLUNGEN FÜR EINE ELEKTRISCHE DREHMASCHINE
METHOD AND ASSEMBLY FOR ASSEMBLING CONDUCTING HAIRPIN WINDINGS FOR A ROTARY ELECTRIC MACHINE

(30) Priorité: 24.08.2021 FR 2108845
(43) Date de publication de la demande: 03.07.2024
(73) Titulaire: Valeo Electrification, 95800 Cergy (FR)
(72) Inventeur: DE CLERCQ, Stephane, 62630 Etaples-sur-Mer (FR); DUQUESNE, Jean, 62630 Etaples-sur-Mer (FR); TELES DE MENEZES, Humberto, 62630 Etaples-sur-Mer (FR); DARRAS, Ludovic, 62630 Etaples-sur-Mer (FR); GRESSIER, Samuel, 62630 Etaples-sur-Mer (FR); ACHIBANE, Hassna, 62630 Etaples-sur-Mer (FR); RAMET, Vincent, 62630 Etaples-sur-Mer (FR)
(74) Mandataire: Valeo Powertrain Systems
(86) Numéro de dépôt international: PCT/EP2022/071441
(87) Numéro de publication internationale: WO 2023/025521

(56) Documents cités:
- EP-A1- 3 664 264
- FR-A1- 3 020 197
- US-A1- 2014 196 282

## Description

L'invention concerne notamment un procédé d'assemblage d'épingles conductrices dans un dispositif de transfert et un ensemble d'assemblage d'épingles conductrices permettant de mettre en œuvre ledit procédé.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique du véhicule tel qu'un véhicule automobile, ou lui fournir une assistance de couple.

Une pièce bobinée de machine électrique tournante est par exemple un stator comprenant un corps de pièce bobinée présentant une culasse formant une pièce de révolution autour d'un axe passant par le centre du stator. Le corps comporte des dents s'étendant radialement à partir de la culasse vers le centre du stator et autour desquelles est disposé un bobinage électrique. Plus particulièrement, les dents délimitent entre elles des encoches dans lesquelles passent des éléments conducteurs participant à former le bobinage du stator. Le bobinage est ici formé d'une pluralité d'épingles conductrices logées partiellement dans les encoches du corps et raccordées électriquement deux à deux via leurs extrémités pour former un chemin électrique continu. La plupart des épingles conductrices comprennent deux segments conducteurs sensiblement parallèles entre eux et reliés par une jonction coudée de manière à former un « U » décalé. Les segments conducteurs sont insérés respectivement, au niveau d'une première face d'extrémité axiale du stator, dans deux encoches distinctes de sorte que les jonctions coudées soient saillantes au niveau de la première face d'extrémité axiale du stator.

Cette forme des épingles en « U » décalé est classiquement obtenue par une première étape de pliage permettant d'obtenir une forme en « U » plat dans laquelle les deux segments conducteurs s'étendent dans un même plan, puis par une deuxième étape de vrillage dans laquelle les deux segments conducteurs sont décalés dans une direction circonférentielle l'un par rapport à l'autre. Cette étape de vrillage est classiquement faite lors d'une étape de vrillage global dans laquelle toutes les épingles conductrices sont vrillées en même temps pour obtenir le décalage de leurs segments conducteurs respectifs. Cette étape de vrillage global permet que positionner les épingles sur un cercle de diamètre correspondant à leur position finale dans le corps de pièce bobinée. Un outil tel qu'une pince permet ensuite de récupérer toutes les épingles mises dans l'outil de vrillage et de les insérer dans le corps de pièce bobinée. L'étape de vrillage global facilite l'opération de transfert des épingles depuis l'outils de vrillage vers le corps de pièce bobinée car une fois vrillées les épingles sont déjà disposées dans leur position finale correspondant au bon diamètre du stator, permettant leur insertion directe dans ledit corps. Cependant, cette étape de vrillage global ne permet pas un vrillage précis des épingles et peut engendrer des cassures dans l'émail recouvrant le cuivre formant les épingles conductrices ce qui peut provoquer des courts-circuits.

L'étape de vrillage peut alternativement être faite par une étape de vrillage unitaire dans laquelle chaque épingle est vrillée individuellement ce qui permet de mieux contrôler les dimensions finales des épingles et d'éviter les cassures de l'émail. De par leur forme en « U » et le décalage entre les segments conducteurs, il n'est pas possible, lors d'un procédé automatique, de positionner les épingles directement dans leur position finale pour leur insertion dans le corps de pièce bobinée. Par exemple, une méthode connue consiste à placer les épingles dans un outil présentant un diamètre largement supérieur au diamètre du corps de pièce bobinée pour ensuite avancer les épingles dans une direction radiale vers l'axe de l'outil jusqu'à ce que les épingles soient placées dans leur position finale pour insertion dans le corps de pièce bobinée. Une pince, telle que celles utilisée après un procédé de vrillage global, peut ensuite être utilisée pour transférer les épingles de cet outil vers le corps de pièce bobinée.

Cette méthode de positionnement des épingles par déplacement radial entre un grand et un petit diamètre peut ne pas être applicable dans certaines configurations de bobinage. En effet, dans certain cas, l'imbrication des épingles entre elles et/ou le nombre important de couches d'épingle conductrice peut complexifier cette méthode voire la rendre impossible. Le temps d'assemblage d'un tel bobinage est alors augmenté ce qui entraine également une augmentation du coût de fabrication.

Les demandes de brevet EP 3 664 264 A1 et US 2014/196282 A1 décrivent des procédés d'assemblage d'épingles conductrices, connus de l'art antérieur.

La présente invention vise à permettre d'éviter les inconvénients de l'art antérieur. A cet effet, la présente invention a pour objet un procédé d'assemblage d'épingles conductrices dans un dispositif de transfert, chaque épingle conductrice étant formée d'au moins un segment conducteur et étant destinée à être connectée électriquement à au moins une autre épingle conductrice pour former un bobinage électrique d'une pièce bobinée d'une machine électrique tournante. Selon l'invention, le dispositif de transfert comprend un corps de broche présentant un axe et une pluralité de lamelles de guidage s'étendant radialement à partir du corps, des espaces latéraux destinés à loger au moins un segment conducteur étant définis entre deux lamelles de guidage adjacentes les épingles conductrices étant réparties en plusieurs groupes d'épingle, chaque groupe comportant au moins une épingle conductrice. Toujours selon l'invention, le procédé d'assemblage comprend au moins une étape d'agencement dans un dispositif d'alimentation d'au moins un groupe d'épingle ; une pluralité d'étapes d'alimentation, chaque étape d'alimentation comprenant le transfert d'au moins un groupe d'épingle du dispositif d'alimentation vers un espace latéral du dispositif de transfert ; et une pluralité d'étapes de rotation, chaque étape de rotation séparant au moins deux étapes d'alimentation l'une de l'autre et comportant un mouvement de rotation du dispositif d'alimentation et/ou du dispositif de transfert de sorte à permettre une prochaine étape d'alimentation et en ce que les épingles conductrices sont réparties en un premier ensemble d'épingles et un second ensemble d'épingles, uniquement les épingles conductrices du premier ensemble d'épingles étant transférées du dispositif d'alimentation vers le dispositif de transfert.

Grâce à la présente invention et en particulier à l'utilisation du dispositif d'alimentation, l'assemblage des épingles est simplifié. En effet, le dispositif d'alimentation permet d'agencer de manière automatique les épingles par groupe directement dans le dispositif de transfert. Un tel procédé d'assemblage peut être utilisé quel que soit la forme des épingles conductrices, le nombre de couche formé par lesdites épingles ou la structure d'imbrication desdites épingles les unes par rapport aux autres. Le procédé d'assemblage des épingles conductrices permet ainsi d'agencer les épingles conductrices, notamment vrillée unitairement, dans leur position finale les unes par rapport aux autres avant leur transfert dans le corps de pièce bobinée. Ledit procédé d'assemblage est simplifié et les risques de mauvais positionnement des épingles sont réduits. Le coût global du procédé d'assemblage est diminué.

Selon une réalisation, lors de l'étape d'alimentation, les épingles conductrices sont transférées du dispositif d'alimentation vers le dispositif de transfert dans une direction radiale par rapport à l'axe du dispositif de transfert. Cela permet de simplifier leur transfert notamment en simplifiant leur guidage par rapport à une insertion dans une direction axiale.

Selon une réalisation, l'étape d'agencement et/ou l'étape d'alimentation est réalisée de manière automatique. Cela permet d'améliorer la productivité et donc la rentabilité du procédé comparé à des étapes faites manuellement.

Selon une réalisation, l'étape d'agencement comporte une phase d'approvisionnement dans laquelle au moins une épingle conductrice est chargée dans le dispositif d'alimentation et une phase de formation dans laquelle au moins un groupe d'épingle est formé, ledit groupe comprenant au moins deux épingles conductrices. Le dispositif d'alimentation permet alors à la fois de former les groupes d'épingle et de les transférer dans le dispositif de transfert.

Selon une réalisation, chaque étape d'alimentation est précédée d'une étape d'agencement de sorte à ce que, lors de ladite étape d'alimentation, tous les groupes d'épingle logés en même temps dans le dispositif d'alimentation sont transférés dans le dispositif de transfert. Ainsi, le dispositif d'alimentation est vidé de tous ces groupes d'épingle lors de chaque étape d'alimentation.

Selon une réalisation alternative, les étapes d'agencement sont indépendantes des étapes d'alimentation. Autrement dit, une étape d'agencement peut être réalisée en parallèle d'une étape d'alimentation ou le procédé d'assemblage peut comporter plusieurs étapes d'alimentation sans interposition d'étape d'agencement. De manière similaire, le procédé d'assemblage peut comporter plusieurs étapes d'agencement sans interposition d'étape d'alimentation. Cela permet de réduire la durée du procédé. De plus, le fait d'agencer les épingles conductrices dans le canal du dispositif d'alimentation au fur et à mesure permet de diminuer la longueur du canal.

Selon une réalisation, le dispositif d'alimentation comporte un canal définissant un logement dans lequel sont agencés plusieurs groupes d'épingle.

Selon une réalisation, chaque étape d'alimentation comprend une phase d'ouverture d'une portion d'extrémité du canal par déplacement d'un élément de blocage et une phase de déplacement d'un premier groupe d'épingle depuis le canal jusqu'à atteindre un espace latéral s'étendant en vis-à-vis du canal.

Selon une réalisation, chaque étape d'alimentation comprend, en outre, une phase de séparation dans laquelle un élément de séparation est déplacé de sorte à obstruer une portion interne du canal et à s'étendre entre le groupe d'épingle subissant la phase de déplacement et un autre groupe d'épingle logé dans le canal. Cela permet d'éviter que le groupe d'épingle subissant la phase de déplacement ne subisse une pression d'un autre groupe d'épingle et ainsi de simplifier son agencement dans l'espace latéral.

Selon une réalisation, la phase d'ouverture et la phase de séparation sont faite de manière simultanée de sorte à ce que la phase de déplacement soit faite pour un seul groupe d'épingle à la fois. Cela simplifie la phase de déplacement.

Selon une réalisation, l'étape d'alimentation comprend, en outre, une phase de chargement dans laquelle au moins groupe d'épingle est agencé en buté contre l'élément de blocage. L'agencement en butée d'un groupe d'épingle à transférer contre l'élément de blocage permet de simplifier l'enchainement du procédé en évitant l'introduction d'une étape supplémentaire de déblocage dudit groupe à transférer avant la phase de déplacement.

Selon une réalisation, la phase de chargement comprend une sous-phase de déplacement de l'élément de blocage de sorte à fermer la portion d'extrémité du canal et une sous-phase de déplacement de l'élément de séparation de sorte à ouvrir la portion interne du canal. Cela permet à la fois de réaliser la phase de chargement et de replacer lesdits éléments pour l'étape d'alimentation suivante. Cela permet donc de limiter le nombre d'étape du procédé.

Selon une réalisation, l'étape de rotation présente un mouvement de rotation de sorte à ce que le canal du dispositif d'alimentation soit agencé en vis-à-vis de l'espace latéral à remplir lors de la prochaine étape d'alimentation.

Selon une réalisation, un groupe d'épingle peut comporter une unique épingle conductrice ou plusieurs épingles conductrices empilées les unes sur les autres dans une direction radiale par rapport à l'axe du dispositif de transfert.

Selon une réalisation, les étapes d'assemblage, les étapes d'alimentation et les étapes de rotation forment une première partie du procédé d'assemblage, ladite première partie s'arrête lorsque tous les espaces latéraux comprennent au moins un groupe d'épingle.

Selon une réalisation, au moins une épingle conductrice présente deux segments conducteurs connectés entre eux par une jonction coudée, lesdits segments conducteurs étant respectivement agencés à des distances différentes de l'axe et selon un angulaire différent. Autrement dit, les segments conducteurs d'une même épingle ne sont pas alignés radialement l'un avec l'autre. Les segments conducteurs sont donc agencés dans des espaces latéraux différents du dispositif de transfert.

Selon une réalisation, le nombre de d'étape d'alimentation est inférieur au nombre d'espace latéral du dispositif de transfert. En effet, chaque groupe d'épingle, transféré lors d'une étape d'alimentation, est logé dans deux espaces latéraux distincts.

Selon une réalisation, le procédé comprend, dans une deuxième partie, une étape de soulèvement dans laquelle les épingles du premier sous-ensemble sont déplacées de sorte à créer un espace d'insertion entre ledit premier sous-ensemble et le second sous-ensemble d'épingles ; une étape d'insertion dans laquelle les épingles du second ensemble sont insérées dans l'espace d'insertion de sorte à ce que les épingles conductrices du second ensemble soient alignées circonférentiellement avec les épingles conductrices du second sous-ensemble ; une étape d'abaissement dans laquelle les épingles du premier sous-ensemble sont déplacées de sorte à ce que lesdites épingles conductrices dudit premier sous-ensemble soient alignées circonférentiellement avec les épingles conductrices du second ensemble.

Selon une réalisation, lors de l'étape d'alimentation un support de maintien radial peut être agencé pour maintenir dans une direction radiale les segments conducteurs des épingles conductrices dans les espaces latéraux du corps de broche. Cela permet de garantir le maintien des segments conducteurs dans les espaces latéraux une fois leur transfert effectué.

Selon une réalisation, le procédé d'assemblage présente, préalablement à l'étape d'agencement, une étape de mise en forme dans laquelle les épingles conductrices sont vrillées pour décaler, dans une direction circonférentielle, leurs segments conducteurs respectifs l'un par rapport à l'autre. Par exemple, cette étape de mise en forme se fait de manière unitaire. On entend par manière unitaire que les épingles conductrices sont mises en forme individuellement les unes par rapport aux autres.

La présente invention a également pour objet un ensemble d'assemblage d'épingles conductrices, chaque épingle conductrice étant formée d'au moins un segment conducteur et étant destinée à être connectée électriquement à au moins une autre épingle conductrice pour former un bobinage électrique d'une pièce bobinée d'une machine électrique tournante. Selon l'invention, l'ensemble d'assemblage comprend un dispositif d'alimentation et un dispositif de transfert comprenant un corps de broche et une pluralité de lamelles de guidage s'étendant radialement à partir du corps, des espaces latéraux destinés à loger au moins un segment conducteur étant définis entre deux lamelles de guidage adjacentes, le dispositif d'alimentation et le dispositif de transfert étant agencés pour mettre en œuvre le procédé d'assemblage tel que précédemment décrit.

Selon une réalisation, le dispositif d'alimentation comporte un boitier et un canal formé dans le boitier de sorte à définir un logement dans lequel sont agencés des segments conducteurs d'une pluralité d'épingles conductrices réparties en plusieurs groupes d'épingle, chaque groupe comportant au moins une épingle conductrice.

Selon une réalisation, le canal du dispositif d'alimentation s'étend de manière traversante et débouchante axialement par rapport à un axe du dispositif d'alimentation.

Selon une réalisation, le canal du dispositif d'alimentation présente une portion d'extrémité définissant une ouverture axiale dudit canal s'étendant en regard du dispositif de transfert.

Selon une réalisation, le canal du dispositif d'alimentation s'étend dans une direction radiale par rapport à l'axe du dispositif de transfert.

Selon une réalisation, le dispositif d'alimentation et le dispositif de transfert sont agencés l'un par rapport à l'autre de sorte que la portion d'extrémité du canal du dispositif d'alimentation s'étende en vis-à-vis d'un espace radial du dispositif de transfert.

Selon une réalisation, le dispositif d'alimentation comporte, en outre, au moins l'un parmi un élément de blocage mobile entre une position de blocage dans laquelle une portion d'extrémité du canal est obstruée et une position d'ouverture dans laquelle ladite portion d'extrémité du canal est ouverte, et un élément de séparation mobile entre une position de séparation dans laquelle une portion interne du canal est obstruée et une position de repos dans laquelle ladite portion interne du canal est ouverte.

Selon une réalisation, le corps de broche présente une forme cylindrique.

Selon une réalisation, l'ensemble d'assemblage comporte, en outre, un support de maintien radial agencé pour maintenir les épingles conductrices dans le dispositif de transfert après leur étape d'alimentation respective dans les espaces latéraux. Par exemple, le support de maintien radial est agencé pour bloquer un mouvement radial, vers l'extérieur par rapport à l'axe du corps de broche, des segments conducteurs.

Selon une réalisation, l'ensemble comporte, en outre, un dispositif d'immobilisation d'au moins une épingle conductrice d'alimentation ou de connexion dans le corps de broche, ladite épingle conductrice d'alimentation ou de connexion présentant une hauteur, dans une direction axiale, différente d'une hauteur, dans une direction axiale, d'une épingle conductrice standard. Ce dispositif d'immobilisation permet d'effectuer le procédé d'assemblage décrit précédemment même lorsque le bobinage électrique à insérer présente différents types d'épingles conductrices. Cela permet de simplifier ledit procédé et de le standardiser quel que soit le type d'épingles conductrices utilisé.

La présente invention pourra être mieux comprise à la lecture de la description détaillée qui va suivre, d'exemples de mise en œuvre non limitatifs de l'invention et de l'examen des dessins annexés.
La [Fig. 1] représente, schématiquement et partiellement, une vue en coupe d'une machine électrique tournante selon un exemple de mise en œuvre de l'invention.
La [Fig. 2] représente schématiquement une vue en perspective du stator de la figure 1.
La [Fig. 3] représente schématiquement une vue en perspective d'un exemple d'épingle conductrice du stator de la figure 2.
La [Fig. 4] représente schématiquement une vue en coupe suivant un plan radial d'une partie du stator de la figure 2.
La [Fig. 5] représente schématiquement une vue en perspective d'un exemple de dispositif de transfert portant des épingles conductrices.
La [Fig. 6] représente schématiquement une vue en perspective d'un exemple d'ensemble d'assemblage comprenant le dispositif de transfert de la figure 5.
La [Fig. 7] représente schématiquement une vue en coupe du dispositif d'alimentation de la figure 6.
Les [Fig. 8], [Fig. 9], [Fig. 10], [Fig. 11], [Fig. 12], [Fig. 13], [Fig. 14] et [Fig. 15] représentent schématiquement et partiellement les différentes étapes du procédé d'assemblage.
La [Fig. 16] représente schématiquement une vue en perspective d'un exemple de support amovible.
La [Fig. 17] représente un logigramme d'un exemple de procédé d'assemblage.

Les éléments identiques, similaires ou analogues conservent les mêmes références d'une figure à l'autre. On notera également que les différentes figures ne sont pas nécessairement à la même échelle.

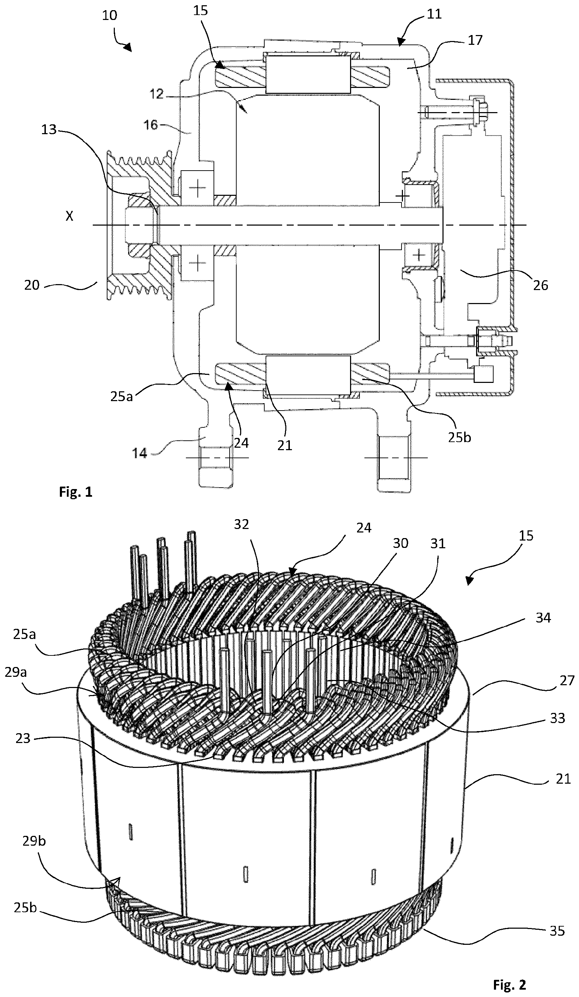

La figure 1 représente un exemple de machine électrique tournante 10 compacte et polyphasée, notamment pour véhicule tel qu'un véhicule automobile ou un drone. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11, notamment formé d'un premier flasque 16 et d'un second flasque 17, fixé au véhicule par des moyens de fixation 14. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe. Un organe d'entraînement 20 tel qu'une poulie ou un pignon peut être fixé sur une extrémité avant de l'arbre 13. Cet organe permet de transmettre le mouvement de rotation à l'arbre ou à l'arbre de transmettre son mouvement de rotation.

Dans l'exemple de réalisation décrit dans la suite de la description, la pièce bobinée correspond au stator 15 de la machine électrique tournante. Cependant on ne sortira pas du cadre de l'invention en utilisant un rotor comme pièce bobinée.

Dans cet exemple de réalisation, le stator 15 comporte un corps de pièce bobinée 21 formé d'un paquet de tôles doté d'encoches 22, équipées d'isolant d'encoche 23 pour le montage d'un bobinage électrique 24. Le bobinage traverse les encoches du corps 21 et forment un chignon avant 25a et un chignon arrière 25b de part et d'autre du corps de pièce bobinée. Par ailleurs, le bobinage 24 est formé d'une ou plusieurs phases comportant au moins un conducteur électrique et étant reliées électriquement à un ensemble électronique 26. L'ensemble électronique 26 qui est ici monté sur le boitier 11, comporte au moins un module électronique de puissance permettant de piloter au moins une phase du bobinage 24. Le module de puissance forme un convertisseur de tension formant notamment un pont redresseur de tension pour transformer la tension alternative générée en une tension continue et inversement. Alternativement, l'ensemble électronique pourrait être déporté de la machine.

La figure 2 représente plus en détail le stator 15. Le corps de pièce bobinée 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour de la culasse, avec des espaces successifs ménagés entre deux dents adjacentes de manière à définir les encoches 22. Selon la direction axiale, les encoches 22 sont ouvertes sur une première face d'extrémité axiale 29a et une seconde face d'extrémité axiale 29b du corps de pièce bobinée 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

Le bobinage 24 est formé à partir d'une pluralité d'épingles conductrices 18, chacune présentant au moins un segment conducteur 19, reliées électriquement entre elles pour former des chemins électriques formant les phases du bobinage. Dans l'exemple de la figure 2, chaque phase comprend une pluralité d'épingles conductrices 18 dont une pluralité de premières épingles standards 31, une pluralité de deuxièmes épingles standards 30, une épingle de connexion 32 et deux épingles d'alimentation 33, 34. Alternativement, chaque phase peut être formée différemment, ainsi on ne sortira pas du cadre de l'invention en changeant la composition du type d'épingle conductrice formant une phase, par exemple en enlevant l'épingle de connexion ou en ayant un nombre différent de type d'épingles standards.

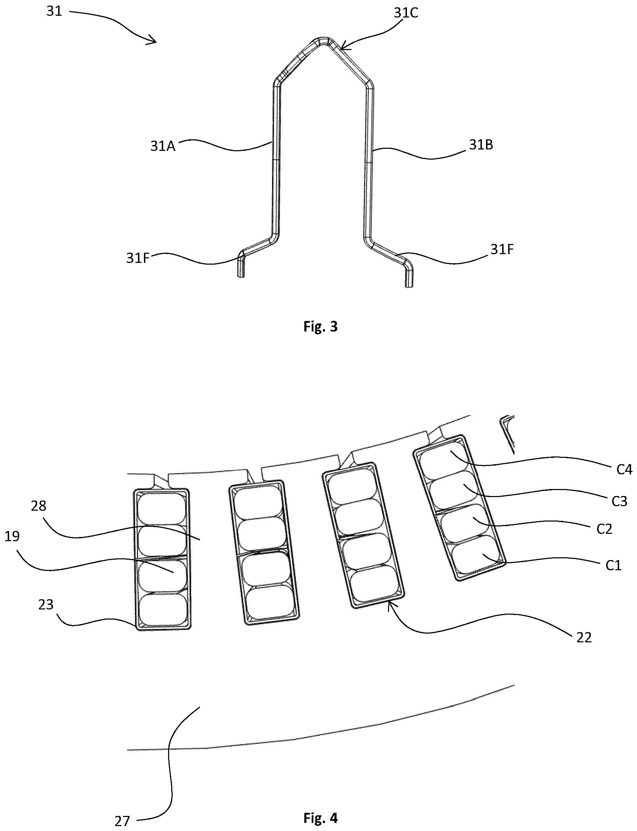

Comme illustré sur la figure 3, une épingle conductrice standard 30, 31 est formée de deux segments conducteurs 31A, 31B s'étendant axialement dans les encoches 22 et qui sont à cet effet sensiblement parallèle entre eux. Lesdits segments conducteurs sont connectés entre eux par l'intermédiaire d'une jonction coudée 31C qui est également conductrice de manière à former une continuité électrique. Les segments conducteurs 31A, 31B d'une même épingle 30, 31 sont disposés dans deux encoches distinctes l'une de l'autre. Les segments conducteurs sont connectés chacun à une autre épingle conductrice via leurs extrémités libres 31F respectives. Ces liaisons électriques entre les épingles conductrices sont par exemple faites par soudure. Les extrémités libres 31F et la jonction coudée 31C s'étendent axialement en dehors des encoches de sorte à former les chignons 25a, 25b. Les épingles d'alimentation 33, 34 sont chacune formées d'un unique segment conducteur s'étendant axialement dans les encoches 22. L'épingle de connexion 32 peut présenter une forme similaire aux épingles standards ou aux épingles d'alimentation. Au moins une épingle d'alimentation 33, 34 ou au moins une épingle de connexion 32 peut présenter une hauteur, dans une direction axiale, différente d'une hauteur d'une épingle standard 30, 31.

Comme visible sur la figure 4, les différents segments conducteurs 19 disposés dans une même encoche 22 sont superposés afin de former un empilement de N couches Ci, étant entendu que ces N couches sont présentes dans chacune des encoches de sorte que l'on forme sur le pourtour du stator des cercles annulaires sensiblement coaxiaux entre eux. Dans cet exemple de réalisation, ces couches sont au nombre de quatre et numérotées de C1 à C4, selon leur ordre d'empilement dans les encoches 22. La première couche C1 correspond à la couche externe, la deuxième couche C2 correspond à une couche centrale externe directement voisine de la première couche C1, la troisième couche C3 correspond à la couche centrale interne directement voisine de la deuxième couche C2 et la quatrième couche C4 correspond à la couche interne. La première couche C1 est ainsi occupée par le segment conducteur le plus proche de la culasse 27 et la couche C4 est ainsi occupée par le segment conducteur le plus proche de l'axe X. Bien entendu, l'invention ne se limite pas à ce seul mode de réalisation de sorte qu'un nombre supérieur ou inférieur de segments conducteurs peut être empilé dans chaque encoche par exemple 2, 6, 8 ou 10 conducteurs. Par exemple, une couche est formée par un unique segment conducteur. Ainsi, chaque encoche 22 comprend N segments conducteurs alignés radialement les uns par rapport aux autres sur une seule ligne et formant chacun une couche Ci. Dans l'exemple illustré, les segments conducteurs présentent chacun une section sensiblement rectangulaire facilitant leur empilement dans l'encoche.

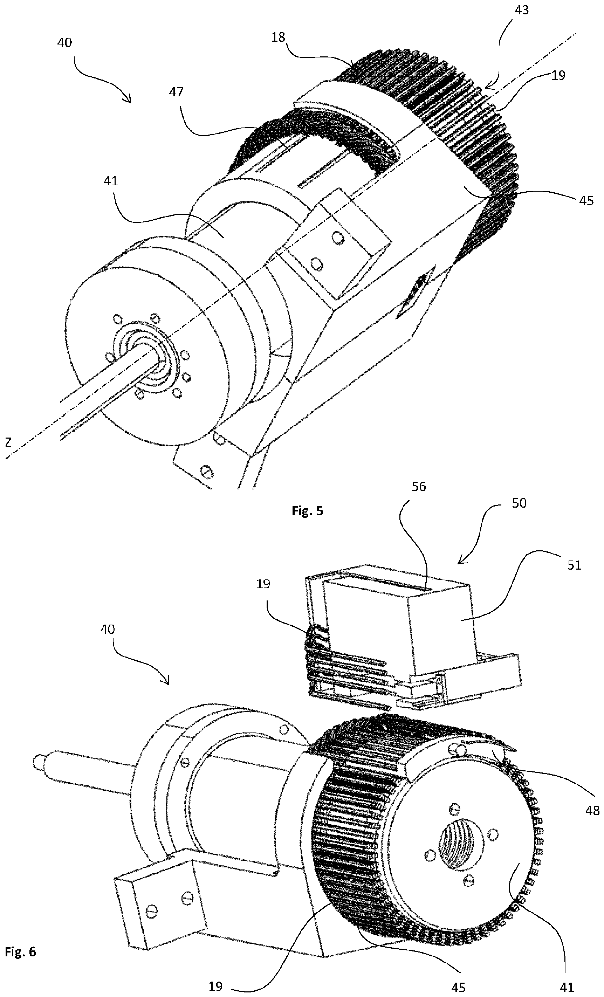

Il va maintenant être décrit en référence aux figures 5 à 17, un procédé d'assemblage 120, réalisé au moyen d'un ensemble d'assemblage, des épingles conductrices 18 permettant de charger lesdites épingles dans un dispositif de transfert 40. Ce dispositif de transfert permettra par la suite d'insérer directement les épingles conductrices dans les encoches 22 du corps de pièce bobinée 21 afin de former la pièce bobinée de machine électrique tournante.

La figure 5 représente un exemple de dispositif de transfert 40 dans lequel sont agencées les épingles conductrices 18 à la fin du procédé d'assemblage 120 et avant leur transfert dans le corps de pièce bobinée 21. Le dispositif de transfert 40 comprend un corps de broche 41 s'étendant de manière globalement cylindrique autour d'un axe Z et une pluralité de lamelles de guidage 42 s'étendant radialement à partir du corps de broche 41. Deux lamelles de guidage adjacentes définissent un espace latéral 43 dans lequel peut être logé au moins un segment conducteur 19 d'une épingle conductrice, et notamment plusieurs segments conducteurs. A la fin du procédé d'assemblage 120, les épingles conductrices 18 sont agencées dans le corps de broche 41 de sorte à ce que les segments conducteurs 19 soient logés au moins partiellement dans les espaces latéraux 43. Plus précisément dans cet exemple, les segments conducteurs 19 sont logés dans les espaces latéraux 43 de sorte à ce que chaque extrémité libre dépasse axialement de l'espace latéral. Autrement dit, chaque lamelle de guidage 42 présente une hauteur dans une direction axiale inférieure à une hauteur axiale des segments conducteurs 19. Alternativement, chaque lamelle de guidage peut présenter une hauteur dans une direction axiale égale ou supérieure à une hauteur des segments conducteurs 19.

Lors de ce procédé d'assemblage 120, les épingles conductrices 18 présentent une forme intermédiaire, c'est-à-dire qu'elles présentent une forme qui n'est pas la forme finale des épingles conductrices pour former le bobinage électrique 24. Lors du procédé d'assemblage, chaque épingle 18 a subi une étape préalable de mise en forme dans laquelle une jonction coudée 18C est formée, notamment par une première phase de pliage puis une seconde phase de vrillage permettant de décaler les segments conducteurs 19 d'une même épingle conductrice. La phase de vrillage est de préférence une phase de vrillage unitaire faite individuellement pour chaque épingle conductrice 18. Lors dudit procédé, les segments conducteurs 19 s'étendent axialement jusqu'à leur extrémité libre.

Le procédé d'assemblage 120 comprend une première étape d'agencement 121 dans laquelle les épingles conductrices 18 sont agencées dans un dispositif d'alimentation 50. L'étape d'agencement 121 comporte une première phase d'approvisionnement 121 et une seconde phase de formation 125.L'étape d'agencement 121 peut être réalisée de manière manuelle, un opérateur mettant manuellement en position les épingles conductrices 18 une par une dans ledit dispositif 50. Alternativement, l'étape d'agencement 121 peut être réalisée de manière automatique. Par exemple, un robot tel qu'un bras mécanique articulé peut saisir les épingles dans un réservoir ou une gouttière et les charger dans ledit dispositif d'alimentation 50 lors de la phase d'approvisionnement 124.

Dans un premier mode de réalisation non illustré, le dispositif d'alimentation peut prendre la forme d'un robot tel qu'un bras mécanique articulé. Le robot peut alors réaliser la phase d'approvisionnement 124 en saisissant par un moyen de préhension, par exemple une pince, une première épingle conductrice 18 puis la phase de formation 125 en saisissant une seconde épingle conductrice 18 pour former un groupe 36 de deux épingles 18. Alternativement, le robot peut saisir une seule épingle conductrice 18 ou saisir directement un groupe d'épingle 36 déjà formé, l'étape d'agencement 121 ne comporte alors pas de phase de formation. Le robot peut également comporter plusieurs moyens de préhension de sorte à saisir plusieurs groupes d'épingle 36 en parallèle.

Dans ce premier mode de réalisation, l'étape d'alimentation 122 est alors réalisée par le même robot que celui utilisé lors de l'étape d'agencement 121. Lors de cette étape d'alimentation 122, le ou les groupes d'épingle 36 agencés dans le robot lors de l'étape d'agencement 121 sont directement insérés dans le ou les espaces latéraux 43 du dispositif de transfert 40, notamment dans une direction radiale par rapport à l'axe Z. Le procédé 120 comprend alors une étape de rotation 123 et deux nouvelles étapes d'agencement 121 et d'alimentation 122 afin de transférer le ou les groupes d'épingle suivant dans le ou les espaces latéraux 43 suivants.

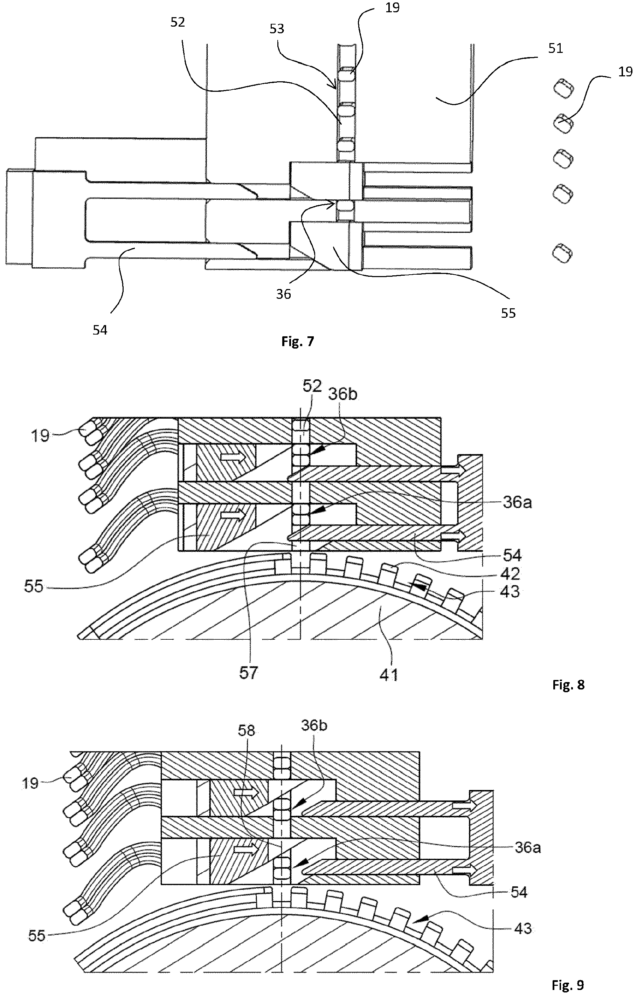

Dans un deuxième mode de réalisation illustré sur les figures 6 à 12, le dispositif d'alimentation 50 comporte un boitier 51 dans lequel s'étend un canal 52 définissant un logement 53 dans lequel sont agencés des segments conducteurs 19 d'une pluralité d'épingles conductrices 18. Dans l'exemple des figures 6 et 7, les épingles conductrices sont réparties en plusieurs groupes d'épingle 36 comprenant chacun une unique épingle conductrice 18. Dans l'exemple des figures 8 à 14, les épingles conductrices sont réparties en plusieurs groupes d'épingle 36 comprenant chacun deux épingles conductrices 18. Dans cet exemple, uniquement un segment conducteur 19 des épingles conductrices est inséré dans le canal 52. L'autre segment conducteur des épingles conductrices n'est, de préférence, pas inséré dans le boitier 51 et est laissé libre et non maintenu.

Le canal 52 s'étend dans la direction de transfert des épingles conductrices vers le dispositif de transfert 40. Dans cet exemple, ledit canal 52 s'étend radialement par rapport à l'axe Z. Le canal 52 est débouchant dans le boitier 51 de sorte à comprendre une portion d'alimentation 56 à travers laquelle les épingles conductrices 18 sont insérées dans ledit canal lors de la phase d'approvisionnement 124 et une portion d'extrémité 57 à travers laquelle les épingles conductrices 18 sont transférées depuis le canal vers le dispositif de transfert 40 lors de l'étape d'alimentation 122. Lesdites portions 56 et 57 étant opposée radialement par rapport à l'axe Z. Les groupes 36 s'étendent de manière superposée les uns par rapport aux autres dans le canal 52.

Le dispositif d'alimentation 50 comprend, ici, deux éléments de blocage 54 et deux éléments de séparation 55. Lesdits éléments peuvent chacun prendre la forme d'un bras. Alternativement, le dispositif d'alimentation 50 pourrait comprendre uniquement un élément de blocage 54 et un élément de séparation 55. Chaque élément de blocage 54 est mobile, en translation dans une direction sensiblement ortho-radiale, entre une position de blocage dans laquelle la portion d'extrémité 57 est obstruée et une position d'ouverture dans laquelle ladite portion 57 est ouverte. Chaque élément de séparation 55 est mobile, en translation dans une direction sensiblement ortho-radiale, entre une position de séparation dans laquelle une portion interne 58 du canal 52 est obstruée et une position de repos dans laquelle ladite portion interne 58 est ouverte. La portion interne s'étendant entre la portion d'alimentation 56 et la portion d'extrémité 57. Les mouvements des éléments de blocage 54 sont de préférence fait dans des directions opposées, et notamment de manière simultanée, aux mouvements des éléments de séparation 55.

Chaque élément 54, 55 est agencé dans une cavité formée dans le boitier 51. Dans cet exemple, l'élément de blocage 54 et l'élément de séparation 55 intervenant dans la même étape d'alimentation 122 sont agencés de manière alignée l'un avec l'autre de part et d'autre de la cavité 52, et notamment aligné dans une direction ortho-radiale. L'élément de séparation 55 présente une hauteur, dans une direction radiale par rapport à l'axe Z, supérieure à une hauteur dans ladite direction radiale de l'élément de blocage 54. De préférence, la hauteur de l'élément de séparation est au moins égale à la somme de la hauteur de l'élément de blocage avec une hauteur du groupe d'épingle 36.

Par exemple, chaque élément 54, 55 peut présenter une extrémité chanfreinée agencée pour accompagner le mouvement du groupe d'épingle correspondant. L"extrémité chanfreinée de l'élément de séparation 55 est agencée pour pousser le groupe d'épingle 36 dans le canal. La pente de l'extrémité chanfreinée de l'élément de séparation 55 est agencée de manière à faire face à la direction radiale interne par rapport à l'axe Z. La pente de l'extrémité chanfreinée de l'élément de blocage 54 est agencée de manière à faire face à la direction radiale externe par rapport à l'axe Z.

La phase de formation 125 peut être réalisée par le dispositif d'alimentation 50. Par exemple, l'élément de séparation 55 peut former les groupes d'épingle 36 en passant de sa position de repos à sa position de séparation. Alternativement, les groupes d'épingle peuvent être formés par un autre élément du dispositif d'alimentation tel qu'un bras de formation qui peut présenter une forme similaire à celle de l'élément de séparation 55. Toujours alternativement, les épingles peuvent être chargées dans le dispositif d'alimentation 50 lors de l'étape d'agencement 121 directement sous la forme de groupe d'épingle 36.

Le procédé d'assemblage 120 comprend une deuxième étape d'alimentation 122 décrite ici en référence au deuxième mode de réalisation. Dans l'étape d'alimentation 122, les groupes d'épingle 36 sont transférés depuis le canal 52 vers les espaces latéraux 43 du dispositif de transfert 40. L'étape d'alimentation 122 comprend une phase d'ouverture 127 de la portion d'extrémité 57 du canal et une phase de déplacement 128 d'un premier groupe d'épingle 36a dans une direction globalement radiale par rapport à l'axe Z et à travers la portion d'extrémité 57 jusqu'à atteindre un espace latéral 43 correspondant s'étendant en vis-à-vis du canal. La phase d'ouverture 127 est réalisée par un déplacement d'un des éléments de blocage 54 depuis sa position de blocage jusqu'à sa position d'ouverture. Le premier groupe d'épingle 36a peut alors entrer dans la phase de déplacement 128 dans laquelle ledit groupe présente un mouvement de translation de sorte à traverser la portion d'extrémité 57 du canal et à se loger dans l'espace latéral 43 en vis-à-vis de ladite portion 57. Le mouvement de translation est par exemple fait par gravité. On comprendra que les segments conducteurs 19 du groupe d'épingle 36a n'étant pas logés dans le canal 52 subissent également la phase de déplacement 128 pour venir se loger dans un espace latéral 43 correspondant.

Chaque étape d'alimentation comprend, ici, une phase de séparation 129 dans laquelle l'un des éléments de séparation 55 est déplacé depuis sa position de repos vers sa position de séparation de sorte à obstruer la portion interne 58. La phase d'ouverture 127 et la phase de séparation 129 sont ici faite de manière simultanée. Comme illustré, lors de chaque étape d'alimentation un unique groupe 36 est transféré du canal 52 vers le dispositif de transfert 40. Les figures 8, 9 et 10 illustrent la chronologie d'une étape d'alimentation.

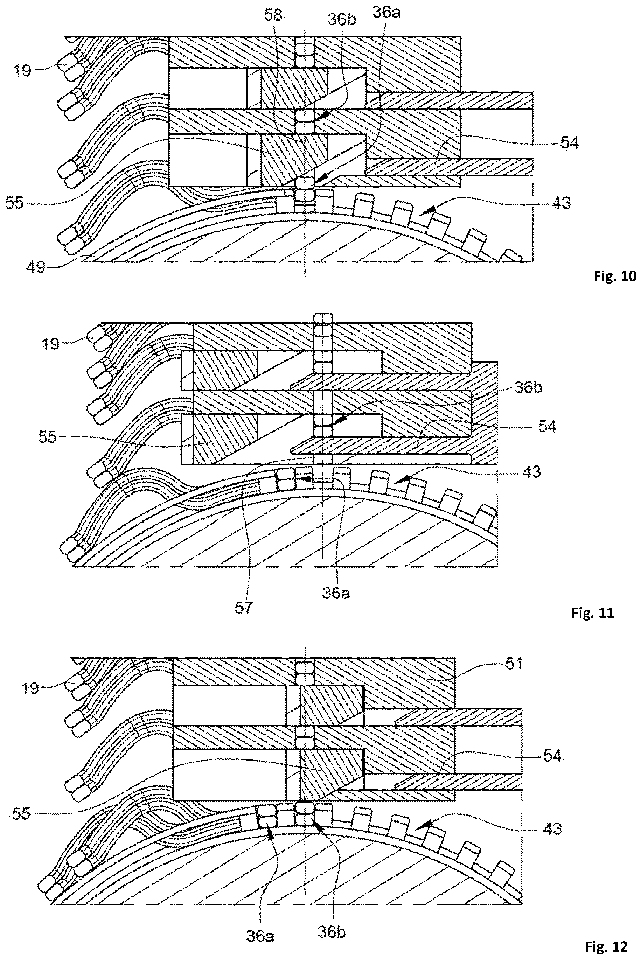

Comme visible sur le figure **11****,** l'étape d'alimentation 122 comprend une phase de chargement 126 séparant deux phases de déplacement 128. Dans la phase de chargement 126, un deuxième groupe d'épingle 36b est déplacé depuis une position de butée radiale contre un des éléments de séparation 55 vers une position de buté radiale contre un des éléments de blocage 54. Le deuxième groupe d'épingle 36b est alors prêt pour une succession de phase d'ouverture 127 et de déplacement 128 afin de le transférer vers le dispositif de transfert 40. La phase de chargement 126 comprend un déplacement de l'élément de blocage 54 de sa position d'ouverture à sa position de blocage de sorte à fermer la portion d'extrémité 57 du canal et un déplacement de l'élément de séparation 55 de sa position de séparation à sa position de repos de sorte à ouvrir la portion interne 58 du canal.

L'utilisation d'un deuxième élément de blocage 54 et d'un deuxième élément de séparation 55 permet ici de simplifier la séparation des groupes 36 préalablement à leur phase de chargement.

Dans cet exemple, une étape d'alimentation 122 comprend une phase de chargement 126, une phase d'ouverture 127, une phase de déplacement 128. Ladite étape 122 peut également comprendre une phase de séparation 129.

Comme visible sur le figure 11, les étapes d'alimentation sont séparées les unes des autres par une étape de rotation 123 dans laquelle le dispositif de transfert 40 présente un mouvement de rotation de sorte à ce que le canal 52 soit agencé en vis-à-vis de l'espace latéral 43 à remplir lors de la prochaine étape d'alimentation 122, dans l'exemple de ce deuxième mode de réalisation.

Comme visible sur la figure 12, une seconde étape d'alimentation 122 est ensuite réalisée avec le deuxième groupe d'épingle 36b. Les différentes étapes d'alimentation 122 et de rotation 123 sont ainsi répétées jusqu'à ce que tous les espaces latéraux 43 comprennent au moins un groupe d'épingle 36. La dernière étape d'alimentation correspond, ici, au remplissage d'un espace latéral adjacent à un espace latéral logeant le premier groupe d'épingle transféré lors de la première étape d'alimentation.

Dans ce mode de réalisation, l'étape d'agencement 121 peut être faite pendant les étapes d'alimentation 122 et de rotation 123 ou être faite en décalée avant ou entre lesdites étapes 122, 123.

Lorsqu'un groupe d'épingle 36 est transféré, lors de chaque étape d'alimentation 122, deux espaces latéraux accueillent respectivement des segments conducteurs 19 dudit groupe. Ainsi, lors des premières étapes d'alimentation, les deux espaces latéraux 43 accueillent leur premier groupe d'épingle alors que lors des dernières étape d'alimentation, un des espaces latéraux accueillent son premier groupe d'épingle et l'autre espace latéral accueille son deuxième groupe d'épingle, le deuxième groupe d'épingle venant se superposer, dans une direction radiale, au premier groupe d'épingle dudit espace latéral. Dans l'exemple illustré ici d'un bobinage à 4 conducteurs par encoches, chaque espace latéral 43 comporte deux groupes d'épingle 36 chacun formé de deux segments conducteurs 19.

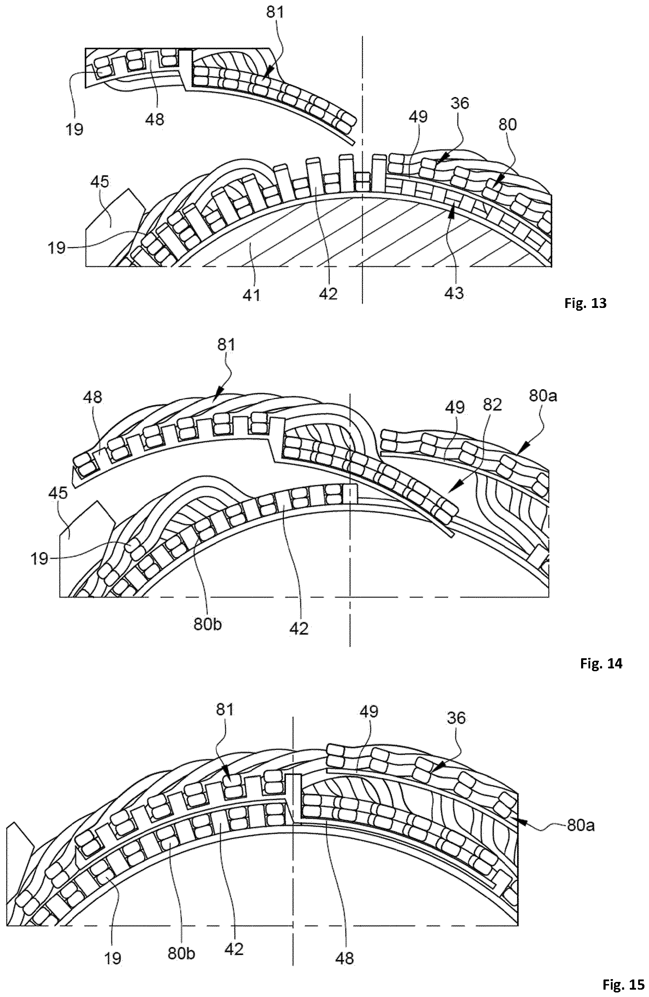

Comme visible sur la figure 13, à la fin de l'étape d'alimentation 122, certains espaces latéraux 43 comprennent leur nombre final d'épingles, correspondant à deux groupes d'épingle 36 dans cet exemple, et certain espaces latéraux 43 comprennent uniquement une partie de leur épingle, c'est-à-dire ici un seul groupe d'épingle 36. Le procédé d'assemblage 120 comprend une première partie A comprenant les étapes d'agencement 121, les étapes d'alimentation 122 et les étapes de rotation 123. Les épingles 18 insérées lors de cette première partie A forment un premier ensemble d'épingle 80.

Le procédé d'assemblage 120 comporte ensuite une deuxième partie B comprenant l'insertion d'un second ensemble d'épingle 81 pour compléter les espaces latéraux 43 ne comprenant pas tous leur groupe d'épingle. La deuxième partie peut être faite manuellement ou de manière automatique. Alternativement, l'insertion du second ensemble d'épingle 81 peut être faite directement dans le corps de pièce bobinée 21, notamment manuellement, et non dans le dispositif de transfert 40. Un exemple de deuxième partie faite de manière automatique est décrit ci-dessous en référence aux figures 13 à 16.

La deuxième partie B du procédé d'assemblage 120 comporte une étape de soulèvement 130, visible sur la figure 14, dans laquelle une partie des épingles du premier ensemble 80, dite premier sous-ensemble d'épingles 80a, est déplacée de sorte à créer un espace d'insertion 82 entre ledit premier sous-ensemble et un second sous-ensemble d'épingles 80b. Le second sous-ensemble d'épingles 80b est formé des épingles du premier ensemble 80 ne faisant pas partie dudit premier sous-ensemble 80a. Par exemple, le déplacement du premier sous-ensemble d'épingles 80a est fait dans une direction comprise dans un plan transversal à l'axe Z. Le déplacement est par exemple un mouvement de soulèvement. Lors de l'étape de soulèvement 130, uniquement un des segments conducteurs 19 de chaque épingle conductrice 18 formant le premier sous-ensemble 80a est déplacé, le deuxième segment de chaque épingle 18 pouvant présenter un léger mouvement d'accompagnement due à la forme de l'épingle.

Le dispositif de transfert 40 peut comprendre un support levier 49 notamment formé par une plaque de forme courbée. Le support de levier 49 porte les épingles conductrices 18 du premier sous-ensemble d'épingles 80a lors de l'étape de soulèvement 130. Le support de levier présente ici un mouvement de basculement permettant de former l'espace d'insertion 82.

Le procédé d'assemblage 120 comporte ensuite une étape d'insertion 131, visible sur la figure 14, dans laquelle le second ensemble d'épingles 81 est inséré dans l'espace d'insertion 82. L'insertion du second ensemble d'épingles 81 se fait dans une direction globalement radiale et circonférentielle par rapport à l'axe Z du dispositif de transfert 40.

A la fin de l'insertion, les épingles conductrices du second ensemble 81 sont alignées circonférentiellement avec les épingles conductrices du second sous-ensemble 80b et sont agencées circonférentiellement entre les épingles conductrices du premier sous-ensemble 80a et les épingles conductrices du second sous-ensemble 80b, comme visible sur la figure 15.

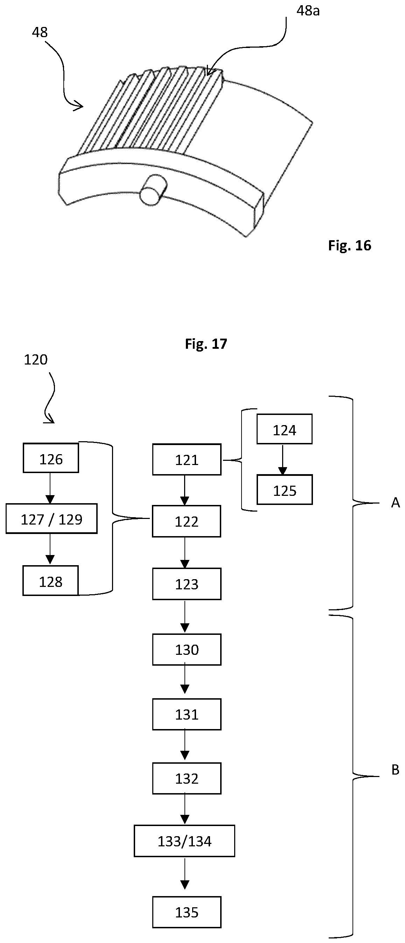

Le dispositif de transfert 40 peut comprendre un support amovible 48 agencé pour porter les épingles conductrices 18 du second ensemble d'épingles 81 lors de l'étape d'insertion 131. Un exemple de support amovible 48 est illustré sur la figure 16. Le support amovible 48 présente une forme de plaque courbée, notamment de manière à suivre la forme du corps de broche 41. Le support amovible présente une première portion 48a sur laquelle des rainures peuvent être formées de sorte à ce que chaque rainure maintienne au moins un segment conducteur 19.

Le procédé d'assemblage 120 comporte ensuite une étape d'abaissement 132 dans laquelle le support levier 49 portant le premier sous-ensemble d'épingles 80a est déplacé de sorte à ce que les épingles conductrices 18 du premier sous-ensemble 80a soient alignées circonférentiellement avec les épingles conductrices du second ensemble 81 et avec celles du second sous-ensemble 80b. Le support de levier présente ici un mouvement de basculement permettant de refermer l'espace d'insertion 82. Par exemple, le mouvement des épingles conductrices lors de l'étape d'abaissement 132 et le mouvement des épingles conductrices lors de l'étape de soulèvement 130 sont fait dans des directions opposées l'une par rapport à l'autre.

Après l'étape d'abaissement 132, les segments conducteurs des épingles conductrices du premier sous-ensemble 80a sont superposés à une partie des segments conducteurs des épingles conductrices du second ensemble 81, lesdits segments conducteurs du second ensemble 81 étant plus proche de l'axe Z. Ainsi, tous les espaces latéraux 43 logent le même nombre de groupe d'épingle 36. Après l'étape d'abaissement 132, les segments conducteurs des épingles conductrices du premier sous-ensemble 80a sont notamment revenus dans leur position initiale, c'est-à-dire avant l'étape de soulèvement 130.

Le procédé d'assemblage 120 peut comporter, après l'étape d'abaissement 125, une étape de retrait 133 du support amovible 48 et une étape de retrait 134 du support levier 49. Lesdites deux étapes de retrait 133, 134 pouvant être faite l'une après l'autre, dans un sens ou dans l'autre, ou de manière simultanée.

Le procédé d'assemblage 120 peut comporter, notamment après les étapes de retrait 133, 134, une étape d'expansion 135 d'au moins une lamelle de guidage 42 de sorte à ce que chaque segment conducteur 19 soit entouré circonférentiellement par deux lamelles de guidage. Par exemple, lors de l'étape d'insertion 131, les lamelles de guidage 42 destinée à définir les espaces latéraux 43 logeant des épingles conductrices du second ensemble d'épingles 81 peuvent être agencées dans une position de repos jusqu'aux étapes de retrait 133, 134. Ainsi, chaque lamelle de guidage 42 peut présenter différentes positions radiales par rapport au corps de broche 41. Par exemple, chaque lamelle de guidage peut présenter une position de maintien dans laquelle elle est agencée de sorte à s'étendre circonférentiellement entre au moins deux segments conducteurs 19 et une position de repos dans laquelle elle est logée dans une rainure formée dans le corps de broche 41 de sorte à laisser libre l'espace circonférentiel entre lesdits deux segments conducteurs. Dans la position de repos, la lamelle peut par exemple être totalement insérée dans le corps de broche de sorte à ne plus être en saillie radiale par rapport à une surface externe dudit corps. Dans cet exemple, chaque lamelle de guidage 42 peut également présenter une position intermédiaire dans laquelle elle maintien uniquement une partie des groupes d'épingle 36 de l'espace latéral 43 et dans cet exemple, uniquement un groupe 36. Chaque lamelle de guidage 42 peut présenter un mouvement radial depuis la position de repos vers la position de maintien en passant par la position intermédiaire.

Alternativement, les lamelles de guidage peuvent être rapportées au corps de broche de sorte à pouvoir être détachées du corps de broche, notamment lors de l'étape de d'insertion. Dans une autre alternative, les lamelles de guidage peuvent présenter un mouvement axial pour dégager l'espace d'insertion 82.

Le dispositif de transfert 40 peut comporter un support de maintien radial 45. Le support de maintien radial 45 est agencé pour maintenir, dans une direction radiale, les segments conducteurs 19 des épingles conductrices 18 dans les espaces latéraux 43. Le support de maintien est positionné autour de la circonférence extérieure du corps de broche 41 muni desdites épingles 18. Le support de maintien radial est notamment positionné après le transfert d'un segment conducteur 19 dans l'espace latéral 43 correspondant. Le support de maintien radial 45 est notamment positionné autour du corps de broche 41 muni des épingles conductrices 18 lors de l'étape de rotation 123. De préférence, le support de maintien 45 peut entourer totalement ledit corps 41. Le support de maintien 45 peut présenter plusieurs portions agencées de manière adjacente pour entourer ledit corps 41. Cela permet de simplifier le positionnement dudit support.

Le dispositif de transfert 40 peut comporter un dispositif d'immobilisation 47, visible sur la figure 5, permettant de maintenir au moins une épingle d'alimentation 33, 34 et/ou au moins une épingle de connexion 32 dans le corps de broche 41. Le dispositif d'immobilisation 47 permet notamment de maintenir lesdites épingles dans les directions radiale et axiale. Dans cet exemple de réalisation, le dispositif d'immobilisation 47 est formé d'une rainure dans laquelle est insérée une épingle d'alimentation 33, 34. L'épingle de connexion 32 est, ici, maintenue de la même manière que les épingles standards 30, 31 via les lamelles de guidage 42. Alternativement, le dispositif d'immobilisation 47 peut être formé par des murets entourant l'épingle à maintenir ou un système d'encliquetage. Les épingles d'alimentation 33, 34 et/ou de connexion 32 peuvent être chargées dans le dispositif de transfert 40 via le dispositif d'alimentation 50 en utilisant la première partie A et/ou la deuxième partie B du procédé d'assemblage 120 en fonction de leur position par rapport aux ensemble d'épingles 80, 81. Alternativement, I épingles d'alimentation 33, 34 et/ou de connexion 32 peuvent être chargées dans le dispositif de transfert 40 via autre dispositif d'alimentation spécifique à leur forme ou via le premier mode de réalisation décrit précédemment ou encore manuellement.

La présente invention trouve des applications en particulier dans le domaine des alternateurs, des alterno-démarreurs, des moteurs électriques ou des machines réversibles mais elle pourrait également s'appliquer à tout type de machine tournante. Bien entendu, la description qui précède a été donnée à titre d'exemple uniquement et ne limite pas le domaine de la présente invention dont on ne sortirait pas en remplaçant les différents éléments par tous autres équivalents. Par exemple, on ne sortira pas du cadre de l'invention en adaptant le procédé et l'ensemble d'assemblage décrit ci-dessus pour une machine électrique tournante dont le stator est positionné radialement à l'intérieur du rotor. En outre, on ne sortira pas du cadre de l'invention en utilisant plusieurs dispositif d'alimentation en parallèle.

## Revendications

1. Procédé d'assemblage d'épingles conductrices dans un dispositif de transfert, chaque épingle conductrice (18) étant formée d'au moins un segment conducteur (19) et étant destinée à être connectée électriquement à au moins une autre épingle conductrice pour former un bobinage électrique (24) d'une pièce bobinée d'une machine électrique tournante (10), le dispositif de transfert (40) comprenant un corps de broche (41) présentant un axe (Z) et une pluralité de lamelles de guidage (42) s'étendant radialement à partir du corps, des espaces latéraux (43) destinés à loger au moins un segment conducteur étant définis entre deux lamelles de guidage adjacentes, les épingles conductrices (18) étant réparties en plusieurs groupes d'épingle (36), chaque groupe comportant au moins une épingle conductrice, le procédé (120) comprenant :
- au moins une étape d'agencement (121) dans un dispositif d'alimentation (50) d'au moins un groupe d'épingle (36) ;
- une pluralité d'étapes d'alimentation (122), chaque étape d'alimentation comprenant le transfert d'au moins un groupe d'épingle (36) du dispositif d'alimentation (50) vers un espace latéral (43) du dispositif de transfert (40); et
- une pluralité d'étapes de rotation (123), chaque étape de rotation séparant au moins deux étapes d'alimentation (122) l'une de l'autre et comportant un mouvement de rotation du dispositif d'alimentation (50) et/ou du dispositif de transfert (40) de sorte à permettre une prochaine étape d'alimentation caractérisé et en ce que les épingles conductrices (18) sont réparties en un premier ensemble d'épingles (80) et un second ensemble d'épingles (81) et que uniquement les épingles conductrices du premier ensemble d'épingles sont transférées du dispositif d'alimentation (50) vers le dispositif de transfert (40).

2. Procédé d'assemblage selon la revendication précédente, **caractérisé en ce que** lors de l'étape d'alimentation (122), les épingles conductrices (18) sont transférées du dispositif d'alimentation (50) vers le dispositif de transfert (40) dans une direction radiale par rapport à l'axe (Z) du dispositif de transfert.

3. Procédé d'assemblage selon l'une des revendications précédentes, **caractérisé en ce que** l'étape d'agencement (121) comporte une phase d'approvisionnement (124) dans laquelle au moins une épingle conductrice (18) est chargée dans le dispositif d'alimentation (50) et une phase de formation (125) dans laquelle au moins un groupe d'épingle est formé, ledit groupe comprenant au moins deux épingles conductrices.

4. Procédé d'assemblage selon l'une des revendications précédentes, **caractérisé en ce que** chaque étape d'alimentation (122) est précédée d'une étape d'agencement (121) de sorte à ce que, lors de ladite étape d'alimentation, tous les groupes d'épingle (36) logés en même temps dans le dispositif d'alimentation (50) sont transférés dans le dispositif de transfert (40).

5. Procédé d'assemblage selon l'une des revendications 1 à 3, **caractérisé en ce que** le dispositif d'alimentation comporte un canal (52) définissant un logement (53) dans lequel sont agencés plusieurs groupes d'épingle (36).

6. Procédé d'assemblage selon la revendication précédente, **caractérisé en ce que** chaque étape d'alimentation comprend une phase d'ouverture (127) d'une portion d'extrémité (57) du canal par déplacement d'un élément de blocage (54) et une phase de déplacement (128) d'un premier groupe d'épingle depuis le canal (52) jusqu'à atteindre un espace latéral (43) s'étendant en vis-à-vis du canal.

7. Procédé d'assemblage selon la revendication précédente, **caractérisé en ce que** chaque étape d'alimentation (122) comprend, en outre, une phase de séparation (129) dans laquelle un élément de séparation (55) est déplacé de sorte à obstruer une portion interne (58) du canal et à s'étendre entre le groupe d'épingle subissant la phase de déplacement (128) et un autre groupe d'épingle logé dans le canal (52).

8. Procédé d'assemblage selon la revendication précédente, **caractérisé en ce que** la phase d'ouverture (127) et la phase de séparation (129) sont faite de manière simultanée de sorte à ce que la phase de déplacement (128) soit faite pour un seul groupe d'épingle (36) à la fois.

9. Procédé d'assemblage selon l'une des revendications 6 à 8, **caractérisé en ce que** l'étape d'alimentation (122) comprend, en outre, une phase de chargement (126) dans laquelle au moins un groupe d'épingle (36) est agencé en buté contre l'élément de blocage (54).

10. Procédé d'assemblage selon l'une quelconque des revendications précédentes, **caractérisé en ce que** les étapes d'assemblage (121), les étapes d'alimentation (122) et les étapes de rotation (123) forment une première partie (A) du procédé d'assemblage, ladite première partie (A) s'arrête lorsque tous les espaces latéraux (43) comprennent au moins un groupe d'épingle (36).

11. Ensemble d'assemblage d'épingles conductrices, chaque épingle conductrice (18) étant formée d'au moins un segment conducteur (19) et étant destinée à être connectée électriquement à au moins une autre épingle conductrice pour former un bobinage électrique (24) d'une pièce bobinée d'une machine électrique tournante, l'ensemble d'assemblage comprenant un dispositif d'alimentation (50) et un dispositif de transfert (40) comprenant un corps de broche (41) et une pluralité de lamelles de guidage (42) s'étendant radialement à partir du corps, des espaces latéraux (43) destinés à loger au moins un segment conducteur (19) étant définis entre deux lamelles de guidage adjacentes ; **caractérisé en ce que** le dispositif d'alimentation (50) et le dispositif de transfert (40) sont agencés pour mettre en œuvre le procédé d'assemblage selon l'une quelconque des revendications précédentes.

12. Ensemble d'assemblage selon la revendication précédente, **caractérisé en ce que** le dispositif d'alimentation (50) comporte un boitier (51) et un canal (52) formé dans le boitier de sorte à définir un logement (53) dans lequel sont agencés des segments conducteurs (19) d'une pluralité d'épingles conductrices réparties en plusieurs groupes d'épingle (36), chaque groupe comportant au moins une épingle conductrice.

13. Ensemble d'assemblage selon la revendication précédente, **caractérisé en ce que** le dispositif d'alimentation (50) comporte, en outre, au moins l'un parmi un élément de blocage (54) mobile entre une position de blocage dans laquelle une portion d'extrémité (57) du canal est obstruée et une position d'ouverture dans laquelle ladite portion d'extrémité (57) du canal est ouverte, et un élément de séparation (55) mobile entre une position de séparation dans laquelle une portion interne (58) du canal est obstruée et une position de repos dans laquelle ladite portion interne (58) du canal est ouverte.

14. Ensemble d'assemblage selon l'une des revendications 11 à 13, **caractérisé en ce qu'**il comporte, en outre, un support de maintien radial (45) agencé pour maintenir les épingles conductrices (18) dans le dispositif de transfert (40) après leur étape d'alimentation respective dans les espaces latéraux (43).

## Patentansprüche

1. Verfahren zur Montage leitfähiger Stifte in eine Transfervorrichtung, wobei jeder leitfähige Stift (18) aus mindestens einem leitfähigen Segment (19) gebildet ist und dazu bestimmt ist, mit mindestens einem anderen leitfähigen Stift elektrisch verbunden zu werden, um eine elektrische Wicklung (24) eines bewickelten Teils einer elektrischen Drehmaschine (10) zu bilden, wobei die Transfervorrichtung (40) einen Spindelkörper (41), der eine Achse (Z) aufweist, und eine Vielzahl von Führungslamellen (42), die sich von dem Körper radial erstrecken, beinhaltet, wobei Seitenräume (43), die dazu bestimmt sind, mindestens ein leitfähiges Segment aufzunehmen, zwischen zwei benachbarten Führungslamellen definiert sind, wobei die leitfähigen Stifte (18) in mehrere Stiftgruppen (36) aufgeteilt sind, wobei jede Gruppe mindestens einen leitfähigen Stift umfasst, wobei das Verfahren (120) Folgendes beinhaltet:
- mindestens einen Schritt des Einrichtens (121) mindestens einer Stiftgruppe (36) in einer Zuführvorrichtung (50);
- eine Vielzahl von Zuführschritten (122), wobei jeder Zuführschritt den Transfer mindestens einer Stiftgruppe (36) von der Zuführvorrichtung (50) zu einem Seitenraum (43) der Transfervorrichtung (40) beinhaltet; und
- eine Vielzahl von Drehschritten (123), wobei jeder Drehschritt mindestens zwei Zuführschritte (122) voneinander trennt und eine Drehbewegung der Zuführvorrichtung (50) und/oder der Transfervorrichtung (40) umfasst, um einen nächsten Zuführschritt zu ermöglichen,
**dadurch gekennzeichnet, dass** die leitfähigen Stifte (18) in eine erste Anordnung von Stiften (80) und eine zweite Anordnung von Stiften (81) aufgeteilt sind und dass nur die leitfähigen Stifte der ersten Anordnung von Stiften von der Zuführvorrichtung (50) zu der Transfervorrichtung (40) transferiert werden.

2. Montageverfahren nach dem vorhergehenden Anspruch, **dadurch gekennzeichnet, dass** die leitfähigen Stifte (18) während des Zuführschritts (122) in einer mit Bezug auf die Achse (Z) der Transfervorrichtung radialen Richtung von der Zuführvorrichtung (50) zu der Transfervorrichtung (40) transferiert werden.

3. Montageverfahren nach einem der vorhergehenden Ansprüche, **dadurch gekennzeichnet, dass** der Einrichtungsschritt (121) eine Beschickungsphase (124), während der mindestens ein leitfähiger Stift (18) in die Zuführvorrichtung (50) geladen wird, und eine Bildungsphase (125), während der mindestens eine Stiftgruppe gebildet wird, umfasst, wobei die Gruppe mindestens zwei leitfähige Stifte beinhaltet.

4. Montageverfahren nach einem der vorhergehenden Ansprüche, **dadurch gekennzeichnet, dass** jedem Zuführschritt (122) ein Einrichtungsschritt (121) vorausgeht, sodass während des Zuführschritts alle Stiftgruppen (36), die gleichzeitig in der Zuführvorrichtung (50) aufgenommen sind, in die Transfervorrichtung (40) transferiert werden.

5. Montageverfahren nach einem der Ansprüche 1 bis 3, **dadurch gekennzeichnet, dass** die Zuführvorrichtung einen Kanal (52) umfasst, der eine Aufnahme (53) definiert, in der mehrere Stiftgruppen (36) eingerichtet sind.

6. Montageverfahren nach dem vorhergehenden Anspruch, **dadurch gekennzeichnet, dass** der Zuführschritt eine Phase des Öffnens (127) eines Endabschnitts (57) des Kanals durch Verlagerung eines Blockierelements (54) und eine Phase des Verlagerns (128) einer ersten Stiftgruppe von dem Kanal (52), bis ein Seitenraum (43), der sich gegenüber dem Kanal erstreckt, erreicht ist, beinhaltet.

7. Montageverfahren nach dem vorhergehenden Anspruch, **dadurch gekennzeichnet, dass** jeder Zuführschritt (122) ferner eine Trennphase (129) beinhaltet, während der ein Trennelement (55) so verlagert wird, dass es einen Innenabschnitt (58) des Kanals versperrt und sich zwischen der Stiftgruppe, die die Verlagerungsphase (128) durchläuft, und einer anderen Stiftgruppe, die in dem Kanal (52) aufgenommen ist, erstreckt.

8. Montageverfahren nach dem vorhergehenden Anspruch, **dadurch gekennzeichnet, dass** die Öffnungsphase (127) und die Trennphase (129) simultan erfolgen, sodass die Verlagerungsphase (128) für eine einzige Stiftgruppe (36) auf einmal erfolgt.

9. Montageverfahren nach einem der Ansprüche 6 bis 8, **dadurch gekennzeichnet, dass** der Zuführschritt (122) ferner eine Ladephase (126) beinhaltet, während der mindestens eine Stiftgruppe (36) so eingerichtet wird, dass sie an dem Blockierelement (54) anliegt.

10. Montageverfahren nach einem der vorhergehenden Ansprüche, **dadurch gekennzeichnet, dass** die Montageschritte (121), die Zuführschritte (122) und die Drehschritte (123) einen ersten Teilabschnitt (A) des Montageverfahrens bilden, wobei der erste Teilabschnitt (A) zu Ende ist, wenn alle Seitenräume (43) mindestens eine Stiftgruppe (36) beinhalten.

11. Anordnung zur Montage leitfähiger Stifte, wobei jeder leitfähige Stift (18) aus mindestens einem leitfähigen Segment (19) gebildet ist und dazu bestimmt ist, mit mindestens einem anderen leitfähigen Stift elektrisch verbunden zu werden, um eine elektrische Wicklung (24) eines bewickelten Teils einer elektrischen Drehmaschine zu bilden, wobei die Montageanordnung eine Zuführvorrichtung (50) und eine Transfervorrichtung (40) beinhaltet, welche einen Spindelkörper (41) und eine Vielzahl von Führungslamellen (42), die sich von dem Körper radial erstrecken, beinhaltet, wobei Seitenräume (43), die dazu bestimmt sind, mindestens ein leitfähiges Segment (19) aufzunehmen, zwischen zwei benachbarten Führungslamellen definiert sind; **dadurch gekennzeichnet, dass** die Zuführvorrichtung (50) und die Transfervorrichtung (40) dazu eingerichtet sind, das Montageverfahren nach einem der vorhergehenden Ansprüche umzusetzen.

12. Montageanordnung nach dem vorhergehenden Anspruch, **dadurch gekennzeichnet, dass** die Zuführvorrichtung (50) ein Gehäuse (51) und einen in dem Gehäuse gebildeten Kanal (52) umfasst, um eine Aufnahme (53) zu definieren, in der leitfähige Segmente (19) einer Vielzahl von leitfähigen Stiften, die in mehrere Stiftgruppen (36) aufgeteilt sind, eingerichtet sind, wobei jede Gruppe mindestens einen leitfähigen Stift umfasst.

13. Montageanordnung nach dem vorhergehenden Anspruch, **dadurch gekennzeichnet, dass** die Zuführvorrichtung (50) ferner mindestens eines umfasst von: einem Blockierelement (54), das zwischen einer Blockierstellung, in der ein Endabschnitt (57) des Kanals versperrt ist, und einer Öffnungsstellung, in der der Endabschnitt (57) des Kanals geöffnet ist, beweglich ist, und einem Trennelement (55), das zwischen einer Trennstellung, in der ein Innenabschnitt (58) des Kanals versperrt ist, und einer Ruhestellung, in der der Innenabschnitt (58) des Kanals geöffnet ist, beweglich ist.

14. Montageanordnung nach einem der Ansprüche 11 bis 13, **dadurch gekennzeichnet, dass** sie ferner einen radialen Halteträger (45) umfasst, der dazu eingerichtet ist, die leitfähigen Stifte (18) nach ihrem jeweiligen Zuführschritt in die Seitenräume (43) in der Transfervorrichtung (40) zu halten.

## Claims

1. Method for assembling conductive pins in a transfer device, each conductive pin (18) being formed of at least one conductive segment (19) and being intended to be electrically connected to at least one other conductive pin in order to form an electrical winding (24) of a wound part of a rotary electric machine (10), the transfer device (40) comprising a spindle body (41) having an axis (Z) and a plurality of guide strips (42) radially extending from the body, lateral spaces (43) intended to house at least one conductive segment being defined between two adjacent guide strips, the conductive pins (18) being split into several groups (36) of pins, each group comprising at least one conductive pin, the method (120) comprising:
- at least one step (121) of arranging at least one group (36) of pins in a supply device (50);
- a plurality of supply steps (122), each supply step comprising transferring at least one group (36) of pins from the supply device (50) to a lateral space (43) of the transfer device (40); and
- a plurality of rotation steps (123), each rotation step separating at least two supply steps (122) from each other and comprising a rotation movement of the supply device (50) and/or of the transfer device (40) so as to allow a subsequent supply step,
**characterized in that** the conductive pins (18) are split into a first set (80) of pins and a second set (81) of pins, and **in that** only the conductive pins of the first set of pins are transferred from the supply device (50) to the transfer device (40).

2. Assembly method according to the preceding claim, **characterized in that**, during the supply step (122), the conductive pins (18) are transferred from the supply device (50) to the transfer device (40) in a radial direction relative to the axis (Z) of the transfer device.

3. Assembly method according to either of the preceding claims, **characterized in that** the arrangement step (121) comprises a supply phase (124) in which at least one conductive pin (18) is loaded into the supply device (50) and a formation phase (125) in which at least one group of pins is formed, said group comprising at least two conductive pins.

4. Assembly method according to one of the preceding claims, **characterized in that** each supply step (122) is preceded by an arrangement step (121) so that, during said supply step, all the groups (36) of pins housed at the same time in the supply device (50) are transferred into the transfer device (40).

5. Assembly method according to one of Claims 1 to 3, **characterized in that** the supply device comprises a channel (52) defining a housing (53) in which several groups (36) of pins are arranged.

6. Assembly method according to the preceding claim, **characterized in that** each supply step comprises a phase (127) for opening an end portion (57) of the channel by moving a blocking element (54) and a phase (128) for moving a first group of pins from the channel (52) to a lateral space (43) extending opposite the channel.

7. Assembly method according to the preceding claim, **characterized in that** each supply step (122) further comprises a separation phase (129) in which a separation element (55) is moved so as to obstruct an internal portion (58) of the channel and to extend between the group of pins being subjected to the movement phase (128) and another group of pins housed in the channel (52).

8. Assembly method according to the preceding claim, **characterized in that** the opening phase (127) and the separation phase (129) are carried out simultaneously so that the movement phase (128) is carried out for a single group of pins (36) at a time.

9. Assembly method according to one of Claims 6 to 8, **characterized in that** the supply step (122) further comprises a loading phase (126) in which at least one group (36) of pins is arranged in abutment against the blocking element (54).

10. Assembly method according to any one of the preceding claims, **characterized in that** the assembly steps (121), the supply steps (122) and the rotation steps (123) form a first part (A) of the assembly method, said first part (A) stops when all the lateral spaces (43) include at least one group (36) of pins.

11. Assembly for assembling conductive pins, each conductive pin (18) being formed of at least one conductive segment (19) and being intended to be electrically connected to at least one other conductive pin in order to form an electrical winding (24) of a wound part of a rotary electric machine, the assembling assembly comprising a supply device (50) and a transfer device (40) comprising a spindle body (41) and a plurality of guide strips (42) radially extending from the body, lateral spaces (43) intended to house at least one conductive segment (19) being defined between two adjacent guide strips; **characterized in that** the supply device (50) and the transfer device (40) are arranged to implement the assembly method according to any one of the preceding claims.

12. Assembling assembly according to the preceding claim, **characterized in that** the supply device (50) comprises a casing (51) and a channel (52) formed in the casing so as to define a housing (53) in which conductive segments (19) of a plurality of conductive pins that are split into several groups (36) of pins are arranged, each group comprising at least one conductive pin.

13. Assembling assembly according to the preceding claim, **characterized in that** the supply device (50) further comprises at least one of a blocking element (54) which is movable between a blocking position, in which an end portion (57) of the channel is obstructed, and an open position, in which said end portion (57) of the channel is open, and a separation element (55) which is movable between a separation position, in which an internal portion (58) of the channel is obstructed, and a rest position, in which said internal portion (58) of the channel is open.

14. Assembling assembly according to one of Claims 11 to 13, **characterized in that** it further comprises a radial retention support (45) arranged to retain the conductive pins (18) in the transfer device (40) after their respective step of being supplied in the lateral spaces (43).
